# EUROPEAN PATENT APPLICATION

(11) **EP 4 175 117 A1**
(43) Date of publication of application: **03.05.2023**
(21) Application number: 20942298.9
(22) Date of filing: 26.06.2020
(51) Int. Cl.: H02J 7/02

(54) **BATTERY SYSTEM, CONTROL DEVICE, AND CONTROL METHOD**

(71) Applicant: TERAWATT TECHNOLOGY K.K., Yokohama-shi, Kanagawa 226-0026 (JP)
(72) Inventor: ARAI, Juichi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2020/025318
(87) International publication number: WO 2021/260936

(57) **Abstract**

A battery system, control device, and control method are provided that can improve the cycle service life. One aspect of the present invention is a battery system comprising: a plurality of battery units including at least one battery cell that has a negative electrode that is free of a negative electrode active material; a plurality of switches that can switch between a first state in which a battery unit is connected to a charging pathway or a discharge pathway, and a second state in which a battery unit is not connected to the charging pathway or the discharge pathway; a charge control unit; and a discharge control unit, wherein the charge control unit includes a first switch control unit that simultaneously sets "a" (where "a" is an integer equal to or greater than 2) selected switches to the first state and sets the remaining switches except the "a" switches to the second state, and the discharge control unit includes a second switch control unit that simultaneously sets "b" (where "b" is an integer less than "a") selected switches to the first state and sets the remaining switches except the "b" switches to the second state.

## Description

### Technical Field

The present invention relates to a battery system, a control device, and a control method.

### Background Art

In recent years, techniques for converting natural energy such as solar power or wind power into electric energy have attracted more attention. Accordingly, various solid-state batteries have been developed as storage devices that are safe and that can store a large amount of electric energy.

Among these, secondary batteries that charge and discharge by transferring metal ions between a positive electrode and a negative electrode are known to have a high voltage and high energy density, and are usually lithium ion secondary batteries. In a typical lithium ion secondary battery, an active material capable of retaining lithium is introduced into the positive electrode and the negative electrode, and charging and discharging are performed by exchanging lithium ions between the positive electrode active material and the negative electrode active material.

Also, a lithium metal secondary battery has been developed that retains lithium by depositing lithium metal on the surface of the negative electrode. For example, Patent Document 1 discloses a high-output lithium metal anode secondary battery using an ultrathin lithium metal anode. Patent Document 2 discloses a lithium secondary battery in which lithium metal is formed on a negative electrode current collector on which metal particles have been formed.

### Citation List

### Patent Literature

Patent Document 1: JP 2019-517722 A
Patent Document 2: JP 2019-537226 A

### Summary of Invention

### Technical Problem

A secondary battery that retains a carrier metal such as lithium by depositing the carrier metal on the surface of the negative electrode is more likely to experience the formation of dendrites (inactivated carrier metal to which potential from the negative electrode is not applied) on the surface of the negative electrode after repeated charging and discharging. As a result, the capacity tends to decrease and the cycle characteristics are insufficient.

As a result of extensive research, the present applicant discovered that the cycle characteristics of such a secondary battery can be improved by charging at a low charging rate and discharging at a high discharge rate in a charging and discharging cycle.

It is an object of the present invention to provide a battery system, a control device, and a control method that can improve the cycle characteristics of a secondary battery that retains a carrier metal by depositing it on the surface of the negative electrode.

### Solution to Problem

The battery system in one aspect of the present invention comprises: a plurality of battery units including at least one battery cell that has a negative electrode that is free of a negative electrode active material; a plurality of switches provided for each of the plurality of battery units that can switch between a first state in which the battery unit is connected to a charging pathway or a discharge pathway, and a second state in which the battery unit is not connected to the charging pathway or the discharge pathway; a charge control unit that performs charging control on the plurality of battery units by controlling the switching of the plurality of switches; and a discharge control unit that performs discharge control of the plurality of battery units by controlling the switching of the plurality of switches, wherein the charge control unit includes a first switch control unit that simultaneously sets "a" (where "a" is an integer equal to or greater than 2) selected switches to the first state and sets the remaining switches except the "a" switches to the second state, and the discharge control unit includes a second switch control unit that simultaneously sets "b" (where "b" is an integer less than "a") selected switches to the first state and sets the remaining switches except the "b" switches to the second state.

In this aspect of the present invention, regarding battery units including a secondary battery having a negative electrode that is free of a negative electrode active material, "a" battery units is connected to the charging path by the first switch control unit during charge control, and "b" battery units, which is less than the "a" battery units, is connected to the charging path by the second switch control unit during discharge control. As a result, the charge rate is reduced and the discharge rate is increased for each battery cell. This improves the cycle characteristics of each battery cell.

### Effect of Invention

The present invention is able to provide a battery system, a control device, and a control method that can improve the cycle characteristics of a secondary battery that retains a carrier metal by depositing it on the surface of the negative electrode.

### Brief Description of Drawings

[Fig. 1] Fig. 1 is a block diagram showing the configuration of a battery system 1 in an embodiment of the present invention.
[Fig. 2] Fig. 2 is a diagram showing an example of a schematic configuration for the secondary battery cell 10.
[Fig. 3] Fig. 3 is a table showing examples of charging and discharging cycle test results.
[Fig. 4] Fig. 4 is a block diagram showing an example of a functional configuration for the BMS 400.
[Fig. 5] Fig. 5 is a diagram showing an example of the flow of charge control operations performed by the BMS 400.
[Fig. 6] Fig. 6 is a diagram showing an example of the flow of discharge control operations performed by the BMS 400.
[Fig. 7] Fig. 7 is a diagram showing an example of a schematic configuration for a variation on the secondary battery cell 10.

### Description of Embodiments

A preferred embodiment of the present invention will now be described with reference to the appended drawings. Note that similar or identical configurations in each figure are denoted by the same reference numbers.

### Configuration of Battery System

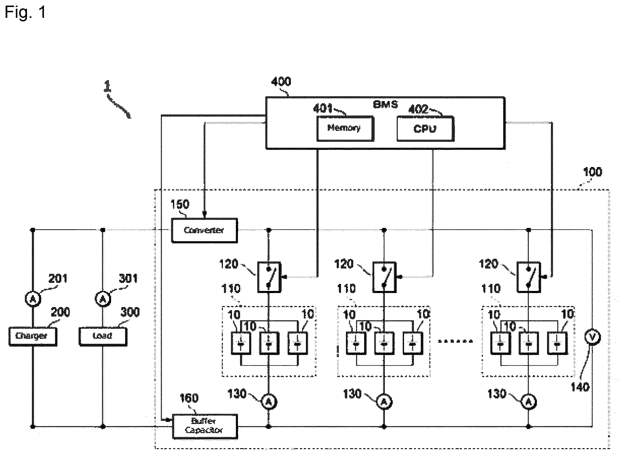

Fig. 1 is a block diagram showing the configuration of a battery system 1 in an embodiment of the present invention.

The battery system 1 can include, for example, a battery pack 100, a charger 200, a load 300, and a battery management system (BMS) 400. As will be described later, the battery pack 100 includes a plurality of secondary battery cells 10 arranged and connected to each other in parallel. The secondary battery cells 10 in the battery pack 100 can be connected to, for example, the charger 200 and charged by a charging current supplied from the charger 200 under the control of the BMS 400. The secondary battery cells 10 in the battery pack 100 can be also connected to the load 300 to supply current to the load 300 under the control of the BMS 400.

The battery pack 100 can include, for example, a plurality of battery units 110, a switch 120 for each battery unit 110, a current sensor 130 for each battery unit, a voltage sensor 140, a converter 150, and a buffer capacitor 160.

The plurality of battery units 110 are arranged so that they can be connected to each other in parallel. There are no particular restrictions on the number of battery units 110 included in a battery pack 100. The battery unit 110 includes at least one secondary battery cell 10 connected in parallel. In the example shown in Fig. 1, each battery unit 110 includes three secondary battery cells 10. A secondary battery cell 10 may be composed of a single unit battery cell, or may be composed of a plurality of unit battery cells connected in series. The configuration of the secondary battery cell 10 may be adjusted, for example, in response to the load 300. The secondary battery cells 10 included in a battery unit 110 may have the same or different characteristics. The configuration of a secondary battery cell 10 will be described later in greater detail.

A switch 120 may consist, for example, of a semiconductor switching element such as a field effect transistor or MOSFET. One end of a switch 120 is connected to one end of a battery unit 110. The other end of the switch 120 is connected to a charger 200 and/or a load 300 via a converter 150. The switch 120 switches between a state in which the battery unit 110 is connected to the charging path and/or the discharging path (first state) and a state in which the battery unit 110 is not connected to either the charging path or the discharging path (second state) based on control signals supplied from the BMS 400. Here, the charging path is a current supply path (charging path) from the charger 200. The discharge path is a current supply path (discharge path) to the load 300.

A current sensor 130 is connected in series to a battery unit 110. The current sensor 130 detects the current flowing through the battery unit 110 and supplies the current value to the BMS 400.

A voltage sensor 140 is connected in parallel to a plurality of battery units 110. Voltage sensor 140 detects the voltage across each battery unit 110 and supplies the voltage value to the BMS 400.

The buffer capacitor 160 can reduce the charging current of a battery unit 110 by absorbing at least some of the current supplied from the charger 300 to the battery unit 110 based on control signals supplied from the BMS 400. This makes it possible to keep the charging rate of the battery unit 110 low even when the current supplied by the charger 200 is high.

The converter 150 can reduce the discharge current from a battery unit 110 and supply it to the load 300 by stepping down the voltage on the battery unit 110 side and applying it to the load 300 side based on control signals supplied from the BMS 400. This makes it possible to keep the discharge rate of the battery unit 110 high even when the current required by the load 300 is low.

The charger 200 can be provided with, for example, a charging connector to which a charging plug to an external power source can be connected, and is configured to convert power supplied from the external power source into charging power for secondary battery cells 10.

The current sensor 201 is connected in series to the charger 200, detects the current (supplied current) from the charger 200 to the battery pack 100, and supplies the current value to the BMS 400.

There are no particular restrictions on load 300, which may be, for example, a drive device for an electric vehicle (electric vehicle, hybrid vehicle).

The current sensor 301 is connected in series with the load 300, detects current (load current) from the battery pack 100 to the load 300, and supplies the current value to the BMS 400.

The BMS 400 is a control unit including, for example, a memory 401 and a CPU 402, and controls the charging and discharging of secondary battery cells 10 in the battery pack 100.

The memory 401 can be, for example, RAM, ROM, semiconductor memory, a magnetic disk device, or an optical disk device, and is used to store driver programs, operating system programs, application programs, and data used by the CPU 402 to execute processing. Various programs may be installed in the storage unit 22 using any installation program common in the art from a computer-readable portable recording medium such as a CD-ROM or a DVD-ROM.

The CPU 402 includes one or more processors and their peripheral circuits, and controls overall operation of the BMS 400. The CPU 402 executes processing based on programs (operating system programs, driver programs, application programs, etc.) stored in the memory 401.

### Secondary Battery Cell 10

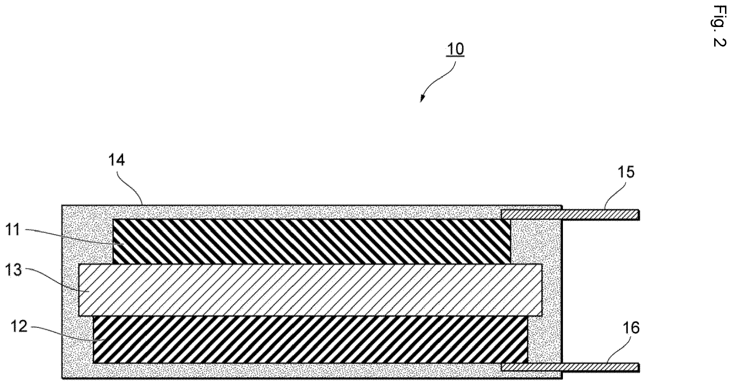

Fig. 2 is a diagram showing an example of a schematic configuration for a secondary battery cell 10. As shown in Fig. 2, the secondary battery cell 10 is a pouch cell in which a positive electrode 11, a negative electrode 12 free of a negative electrode active material, and a separator 13 disposed between the positive electrode 11 and the negative electrode 12, etc. are sealed inside an outer casing 14. A positive electrode terminal 15 and a negative electrode terminal 16 are connected to the positive electrode 11 and the negative electrode 12, respectively, and extend from the outer casing 14 so that the cell can be connected to an external circuit. The upper and lower surfaces of the secondary battery cell 10 are flat, and the shape can be, but is not limited to, that of a rectangle. Another shape (for example, circular, etc.) can be selected depending on the intended application.

### Positive Electrode

Any positive electrode 11 commonly used in a secondary battery can be used here. This can be selected depending on the intended use of the secondary battery and the type of carrier metal being used. From the standpoint of increasing the stability and output voltage of the secondary battery, the positive electrode 11 preferably contains a positive electrode active material.

The positive electrode active material is a material used to hold metal ions in the positive electrode, and this serves as a host material for the metal ions. Examples of positive electrode active materials include, but are not limited to, metal oxides and metal phosphates. Examples of metal oxides include, but are not limited to, cobalt oxide-based compounds, manganese oxide-based compounds, and nickel oxide-based compounds. Examples of metal phosphates include, but are not limited to, iron phosphate-based compounds and cobalt phosphate-based compounds.

When the carrier metal is lithium ions, typical examples of positive electrode active materials include lithium nickel cobalt aluminum oxide (NCA, LiNiCoAlO₂), lithium nickel cobalt magnesium oxide (LiNiCoMnO₂, referred to as NCM and depending on the difference in element ratio sometimes as NCM622, NCM523, NCM811, etc.), lithium cobaltate (LCO, LiCoO₂) and lithium iron phosphate (LFP, LiFePO₄) can be mentioned. These positive electrode active materials can be used alone or in combinations of two or more. The amount of positive electrode active material included may be, for example, 50% by mass or more and 100% by mass or less relative to the overall mass of the positive electrode 11.

The positive electrode 11 may contain components other than the positive electrode active material. Examples of these components include, but are not limited to, conductive aids, binders, solid polymer electrolytes, and inorganic solid electrolytes commonly used in the art.

The positive electrode 11 may contain a binder. Examples of binders include fluorine-based binders, water-based binders, and imide-based binders. Specific examples of binders include polyvinylidene fluoride (PvDF), styrene-butadiene rubber and carboxymethyl cellulose (SBR-CMC) mixtures, polyacrylic acid (PAA), lithium polyacrylate (Li-PAA), polyimide (PI), polyamideimide (PAI), and aramids. The amount of binder included may be, for example, 0.5% by mass or more and 30% by mass or less relative to the overall mass of the positive electrode 11.

The positive electrode 11 may contain a conductive aid. Examples of conductive aids that can be used include carbon black, acetylene black (AB), carbon nanofibers (VGCF), single-walled carbon nanotubes (SWCNT), and multi-walled carbon nanotubes (MWCNT). The amount of conductive aid included may be, for example, 0.5% by mass or more and 30% by mass or less relative to the overall mass of the positive electrode 11.

The weight per unit area of the positive electrode 11 can be, for example, from 10 to 40 mg/cm². The thickness of the positive electrode active material 12 can be, for example, from 30 to 150 µm. The density of the positive electrode 11 can be, for example, from 2.5 to 4.5 g/ml. The areal capacity of the positive electrode 11 can be, for example, from 1.0 to 10.0 mAh/cm².

The area of the positive electrode 11 is preferably 10 cm² or more and 300 cm² or less, more preferably 20 cm² or more and 250 cm² or less, and even more preferably 50 cm² or more and 200 cm² or less.

The thickness (length in the vertical direction) of the positive electrode 11 is preferably 20 µm or more and 150 µm or less, more preferably 40 µm or more and 120 µm or less, and even more preferably 50 µm or more and 100 µm or less.

### Negative Electrode

The negative electrode 12 is free of a negative electrode active material. It can be difficult to increase the energy density of a battery that has a negative electrode including a negative electrode active material because of the presence of the negative electrode active material. However, because a secondary battery cell 10 in the present embodiment has a negative electrode 12 that is free of a negative electrode active material, this problem does not arise. In other words, the secondary battery cell 10 has a high energy density because charging and discharging are performed by depositing metal on the surface of the negative electrode 12 and dissolving the deposited metal.

Here, "negative electrode active material" refers to the material holding the metal ("carrier metal" below) corresponding to the metal ions serving as the charge carrier in the battery on the negative electrode 12, and may also be referred to as the carrier metal host material. Examples of holding mechanisms include, but are not limited to, intercalation, alloying, and occlusion of metallic clusters. The negative electrode active material is typically used to retain lithium metal or lithium ions in the negative electrode 12.

Examples of negative electrode active materials include, but are not limited to, carbon-based substances, metal oxides, metals, and alloys. Carbon-based substances include, but are not limited to, graphene, graphite, hard carbon, mesoporous carbon, carbon nanotubes, and carbon nanohorns. Examples of metal oxides include, but are not limited to, titanium oxide-based compounds, tin oxide-based compounds, and cobalt oxide-based compounds. There are no particular restrictions on the metal or alloy as long as it can be alloyed with the carrier metal. Examples include silicon, germanium, tin, lead, aluminum, gallium, and alloys containing these.

There are no particular restrictions on the negative electrode 12 as long as it does not contain a negative electrode active material and can be used as a current collector. Examples include at least one type selected from the group consisting of metals such as Cu, Ni, Ti, Fe and other metals that do not react with Li, alloys of these metals, and stainless steel (SUS). When SUS is used as the negative electrode 12, any well-known type of SUS can be used. The negative electrode materials mentioned above may be used alone or in combinations of two or more. A "metal that does not react with Li" refers to a metal that does not react with lithium ions or lithium metal to form an alloy under the operating conditions of the secondary battery cell 10.

The negative electrode 12 is preferably a lithium-free electrode. Because highly flammable lithium metal does not have to be used in the production process, a secondary battery cell 10 with even better safety and productivity can be realized. From this standpoint and from the standpoint of improving the stability of the negative electrode 12, the negative electrode 12 is preferably at least one type selected from the group consisting of Cu, Ni, alloys of these metals, and stainless steel (SUS). From the same standpoints, the negative electrode 12 is more preferably made of Cu, Ni, or alloys of these metals, and even more preferably of Cu or Ni.

A "negative electrode free of a negative electrode active material" is also referred to as a "zero anode" or "anode free," and means the amount of negative electrode active material in the negative electrode is 10% by mass or less relative to the overall mass of the negative electrode. The amount of negative electrode active material in the negative electrode is preferably 5.0% by mass or less, more preferably 1.0% by mass or less, even more preferably 0.1% by mass or less, and still more preferably 0.0% by mass or less, relative to the overall mass of the negative electrode.

The negative electrode 12 preferably has an adhesive layer formed on the surface to improve adhesion between the deposited carrier metal and the negative electrode. In this aspect of the present invention, when a carrier metal, especially lithium metal, is deposited on the negative electrode 12, adhesion between the negative electrode 12 and the deposited metal can be improved. As a result, delamination of the deposited metal from the negative electrode 12 can be suppressed, so that the cycle characteristics of the secondary battery cell 10 are improved.

Examples of adhesive layers include metals other than that in the negative electrode, alloys of these metals, and carbonaceous materials. Examples of adhesive layers include, but are not limited to, Au, Ag, Pt, Sb, Pb, In, Sn, Zn, Bi, Al, Ni, Cu, graphene, graphite, hard carbon, mesoporous carbon, carbon nanotubes, and carbon nanohorns. There are no particular restrictions on the thickness of the adhesive layer, but it is preferably 1 nm or more and 300 nm or less, and more preferably 50 nm or more and 150 nm or less. Using the adhesive layer in this aspect of the present invention results in even better adhesiveness between the negative electrode 12 and the deposited metal. When the adhesive layer corresponds to the negative electrode active material described above, the adhesive layer is 10% by mass or less, preferably 5.0% by mass or less, more preferably 1.0% by mass or less, and still more preferably 0.1% by mass relative to the negative electrode.

The area of the negative electrode 12 is preferably greater than that of the positive electrode 11. For example, all four sides can be slightly larger than those of the positive electrode 11 (for example, by about 0.5 to 1.0 mm).

The thickness (length in the vertical direction) of the negative electrode 12 is preferably 20 µm or less, more preferably 10 µm or less, and even more preferably 1 µm or less.

### Separator

The separator 13 is the component that separates the positive electrode 11 and the negative electrode 12 to prevent short circuiting, while maintaining conductivity of the metal ions serving as the charge carrier between the positive electrode 11 and the negative electrode 12. When an electrolytic solution is used, the separator 13 also plays a role in retaining the electrolytic solution.

The separator 13 preferably has a separator base material and a separator coating layer coating the surface of the separator base material. There are no particular restrictions on the separator base material as long as it can play this role, and can be, for example, a porous material such as porous polyethylene (PE), polypropylene (PP), or a laminated structure thereof. The area of the separator 13 is preferably larger than the area of the positive electrode 11 and the negative electrode 12, and the thickness is preferably from 5 to 20 µm, for example.

In the present embodiment, the separator coating layer can be applied to one or both sides of the separator base material. The separator coating layer firmly bonds the separator base material to the adjacent layers above and below the base material, while maintaining ionic conductivity and without reacting with the metal ions serving as the charge carriers. There are no restrictions on the separator coating layer as long as it has these characteristics. For example, it may consist of a binder such as polyvinylidene fluoride (PvDF), styrene-butadiene rubber and carboxymethyl cellulose (SBR-CMC) mixtures, polyacrylic acid (PAA), lithium polyacrylate (Li-PAA), polyimide (PI), polyamideimide (PAI), and aramids. The separator coating layer may contain inorganic particles such as silica, alumina, titania, zirconia, magnesium oxide, or magnesium hydroxide particles.

### Electrolytic Solution

The secondary battery cell 10 may contain an electrolytic solution. The separator 13 is immersed in the electrolytic solution. The electrolytic solution is an ionically conductive solution prepared by dissolving an electrolyte in a solvent that acts as a conductive path for lithium ions. When an electrolytic solution is used, the internal resistance of the secondary battery cell 10 can be lowered and the energy density and cycle characteristics improved.

A lithium salt is preferably used as the electrolyte. Examples of lithium salts include, but are not limited to, LiPF₆, LiBF₄, lithium bis(trifluoromethanesulfonyl)imide (LiTFSI), lithium bis(fluorosulfonyl)imide (LiFSI), LiClO₄, lithium bisoxalate borate (LiBOB), and lithium bis(pentafluoroethanesulfonyl)imide (LiBETI). The lithium salt is preferably LiFSI from the standpoint of improving the cycle characteristics of the battery 1 even more. These lithium salts may be used alone or in combinations of two or more.

Examples of solvents include, but are not limited to, ethylene carbonate (EC), propylene carbonate (PC), dimethyl carbonate (DMC), 1,2-dimethoxyethane (DME), diethyl carbonate (DEC), γ-butyrolactone (GBL), 1,3-dioxolane (DOL), and fluoroethylene carbonate (FEC).

### Outer Casing

The outer casing 14 houses and seals the positive electrode 11, the negative electrode 12, the separator 13, and the electrolytic solution in the secondary battery cell 10, and can be made of, for example, a laminate film.

### Positive Electrode Terminal and Negative Electrode Terminal

One end of the positive electrode terminal 15 is connected to the upper surface of the positive electrode 11 (the surface opposite the one facing the separator 13) and extends from the outer casing 14, and the other end is connected to an external circuit (not shown). One end of the negative electrode terminal 16 is connected to the lower surface of the negative electrode 12 (the surface opposite the one facing the separator 13) and from the outer casing 14, and the other end is connected to an external circuit (not shown). There are no particular restrictions on the materials used in the positive electrode terminal 15 and the negative electrode terminal 16 as long as they are conductive. Examples include Al and Ni.

### Charging and Discharging Cycle Test Results

Here, after producing a secondary battery cell 10 with the configuration shown in Fig. 2, a test was conducted in which the charging and discharging cycle was repeated on different charging rate and discharging rate settings. The following is a summary of the secondary battery cell 10 that was produced. The positive electrode was LiNi₂₋ₓAlₓO₂ (x = 0.01 to 0.5) with an area of about 16 cm² and a thickness of about 75 µm. The negative electrode was copper foil (Cu foil) with an area of about 25 cm² and a thickness of about 8 µm. The separator was a microporous polyethylene film coated with PvDF. The electrolytic solution was a mixture of 80% by volume of dimethoxyethane (DME), 20% by volume of fluorinated ether, and 1 mol of LiN(SO₂F)₂.

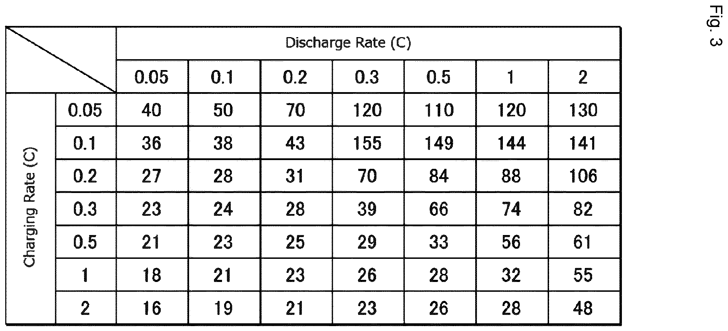

Fig. 3 is a table showing examples of charging and discharging cycle test results. In the test results shown in Fig. 3, the rows indicate charge rates and the columns indicate discharge rates. The numerical value in each cell indicates the number of cycles at which the capacity retention rate fell below 90%.

Generally speaking, as shown in Fig. 3, a lower charge rate and a higher discharge rate tended to result in more cycles at which capacity retention rate was less than 90%. Therefore, it can be said that in a secondary battery in which a carrier metal (for example, lithium metal) is retained by being deposited on the surface of the negative electrode, a lower charge rate and a higher discharge rate yield better cycle characteristics.

This is probably due to the following reason. As mentioned above, because the negative electrode 12 is free of a negative electrode active material in a secondary battery cell 10 of the present embodiment, the carrier metal is deposited on the surface of the negative electrode 12 during charging, and the deposited carrier metal is dissolved during discharging. At this time, a lower charge rate results in a slower deposition reaction of the carrier metal on the negative electrode 12, and the depositing of inactivated carrier metal is suppressed. In addition, a higher discharge rate results in a more vigorous dissolution reaction of the carrier metal on the negative electrode 12, and the generation of inactivated carrier metal is suppressed.

Therefore, it can be said that the ratio of the discharge rate to the charge rate (the value obtained by dividing the discharge rate by the charge rate) is preferably higher from the standpoint of cycle characteristics. More specifically, the ratio of the discharge rate to the charge rate is preferably 1 or more, more preferably 1.5 or more, even more preferably 2 or more, still more preferably 3 or more, and yet more preferably 5 or more.

### BMS Functional Configuration

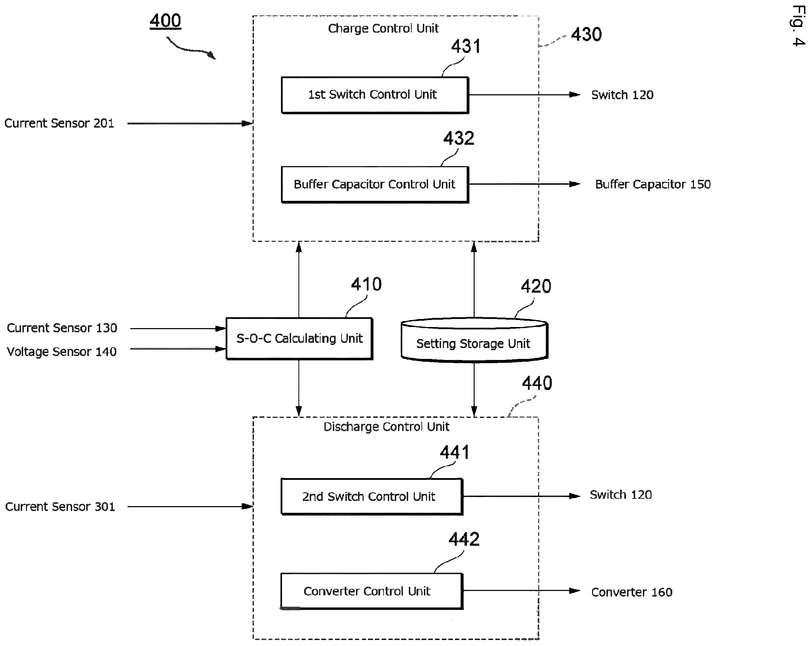

Fig. 4 is a block diagram showing an example of a functional configuration for the BMS 400. The BMS 400 in the present embodiment can, based on the test results described above, control the switches 120 so that the charge rate is low during charge control, and control the switches 120 so that the discharge rate is high during discharge control.

As shown in Fig. 4, the BMS 400 can include, for example, a state-of-charge calculating unit 410, a setting storage unit 420, a charge control unit 430, and a discharge control unit 440. These functional modules in the BMS 400 are implemented by the CPU 402 executing programs stored in memory 401. The BMS 400 can also include a setting storage unit 420. The setting storage unit 420 may be part of the memory 402.

### State-of-Charge Calculating Unit

The state-of-charge calculating unit 411 calculates the state of charge of a secondary battery cell 10, for example, every predetermined cycle, based on the current value of the battery unit 110 obtained from the current sensor 130 and the voltage value of the battery unit 110 obtained from the voltage sensor 140, and supplies the calculated state of charge to the charge control unit 430 and/or the discharge control unit 440. Here, the state of charge may be any type of information indicating the state of charge of the secondary battery cells 10. For example, the state of charge includes SOC (state of charge) which indicates the percentage of the remaining current capacity relative to the capacity when fully charged.

### Setting Storage Unit

The setting storage unit 420 stores various settings related to controls performed by the BMS 400. For example, the setting storage unit 420 includes a charging plan that defines specific control details for charging the secondary battery cells 10. The setting storage unit 420 can also include a discharge plan that defines specific control details for discharging the secondary battery cells 10. The charging plan and discharging plans may include freely established settings.

### Charge control unit

The charge control unit 430 can execute charging controls based on the charging plan stored in the setting storage unit 420. The charge control unit 430 includes, for example, a first switch control unit 431 and a buffer capacitor control unit 432.

During charge control, the first switch control unit 431 can control the charging of each battery unit 110 in the battery pack 100 by supplying a control signal to each of the switches 120 in the battery pack 100 to switch each switch 120 between a first state and a second state. For example, the first switch control unit 431 simultaneously sets "a" selected switches 120 among the plurality of switches 120 to the first state and sets the remaining switches 120 that are not among the "a" switches 120 in the plurality of switches 120 to the second state. At this time, the battery units 110 corresponding to each of the "a" switches 120 in the first state are connected to the charging path, and the battery units 110 corresponding to each of the switches 120 not among the "a" switches 120 are not connected to the charging path. As a result, the current supplied from charger 200 to the battery pack 100 flows to each of the "a" battery units 110 among the plurality of battery units 110 connected to the charging path. Here, "a" is an integer equal to or greater than 2, and can be set to an integer greater than "b" (the number of switches 120 in the first state during discharge control) which will be described later. This lowers the charging rate of each secondary battery cell 10.

When a predetermined first switching condition is satisfied, the first switch control unit 431 switches one switch 120 selected from the "a" switches 120 in the first state from the first state to the second state, and switches one switch 120 selected from among the switches 120 other than the "a" switches 120 in the second state to the first state. There are no particular restrictions on the selection criteria, which may include, for example, the state of charge of the switches 120 or the order of the switches 120 set in advance in the charging plan. The first switching condition may include the state of charge of at least one of the battery units 110 associated with the "a" switches 120 in the first state reaching or exceeding a second threshold. The first switching condition may have a plurality of second thresholds. The first switching condition may also include a predetermined amount of time passing since any of the "a" switches 120 in the first state were switched from the second state to the first state. The first switching condition may be a combination of the conditions described above.

When the current supplied from charger 200 is equal to or greater than a predetermined threshold (first threshold), the buffer capacitor control unit 432 can control buffer capacitor 160 to reduce the current supplied to the battery units 110 by absorbing at least some of the supplied current. The first threshold can have any setting, but can be set to a value (for example, 0.3 C) obtained by multiplying the desired charging rate (0.1 C in this example) for the secondary battery cells 10 by "a" (3 in this example). There are no particular restrictions on the amount by which the buffer capacitor 160 reduces the charging current of the battery unit 110, but the buffer capacitor 160 may reduce the charging current to the first threshold value described above, for example. In this way, the charging rate for the secondary battery cells 10 can be set to the desired charging rate.

The discharge control unit 440 can execute discharge controls based on the discharge plan stored in the setting storage unit 420. The discharge control unit 440 can include, for example, a second switch control unit 441 and converter control unit 442.

During discharge control, the second switch control unit 441 can control the discharge of each battery unit 110 in the battery pack 100 by supplying a control signal to each of the switches 120 in the battery pack 100 to switch each switch 120 between a first state and a second state. For example, the second switch control unit 441 simultaneously sets "b" selected switches 120 among the plurality of switches 120 to the first state and sets the remaining switches 120 that are not among the "b" switches 120 in the plurality of switches 120 to the second state. At this time, the battery units 110 corresponding to each of the "b" switches 120 in the first state are connected to the discharge path, and the battery units 110 corresponding to each of the switches 120 not among the "b" switches 120 are not connected to the discharge path. As a result, the discharge current supplied from the battery pack 100 to the load 300 flows from each of the "b" battery units 110 among the plurality of battery units 110 connected to the discharge path. Here, "b" is an integer and can be set to an integer less than "a" (the number of switches 120 in the first state during charge control) described earlier. This increases the charge rate of each secondary battery cell 10.

When a predetermined second switching condition is satisfied, the second switch control unit 441 switches one switch 120 selected from the "b" switches 120 in the first state from the first state to the second state, and switches one switch 120 selected from among the switches 120 other than the "b" switches 120 in the second state to the first state. There are no particular restrictions on the selection criteria, which may include, for example, the state of charge of the switches 120 or the order of the switches 120 set in advance in the discharge plan. The second switching condition may include the state of charge of at least one of the battery units 110 associated with the "b" switches 120 in the first state reaching or exceeding a fourth threshold. The second switching condition may have a plurality of fourth thresholds. The second switching condition may also include a predetermined amount of time passing since any of the "b" switches 120 in the first state were switched from the second state to the first state. The second switching condition may be a combination of the conditions described above.

When the current required by the load 300 is less than or equal to a predetermined threshold (a third threshold), the converter control unit 442 can control the converter 150 to reduce the discharge current from battery unit 110 supplied to the load 300 by stepping down the voltage on the battery unit 110 side and applying the voltage to the load 300 side. Here, the third threshold may have any setting, and may be set to the desired discharge rate for the secondary battery cells 10 (for example, 0.3 C). There are no particular restrictions on the amount by which the converter 150 reduces the discharge current of the battery unit 110, but the converter 150 can, for example, reduce the discharge current to the third threshold value. In this way, the discharge rate for the secondary battery cells 10 can be set to the desired discharge rate.

### Operations

### Charge Control

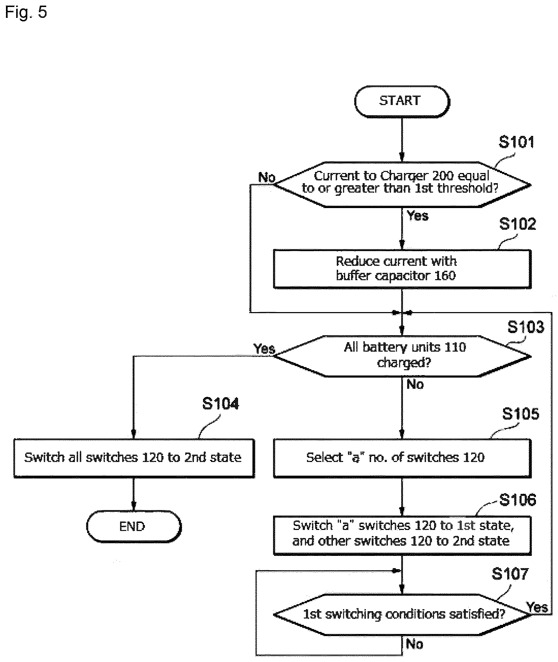

Fig. 5 is a diagram showing an example of the flow of charge control operations performed by the BMS 400. The processing is performed primarily by charge control unit 430 based on the charging plan stored in the setting storage unit 412.

When the charge control has been started, the state-of-charge calculating unit 411, for example, at predetermined intervals, calculates the state of charge of the battery units and sends the state of charge to the charge control unit 430.

### (S101)

First, the buffer capacitor control unit 432 obtains the current value for the current supplied by the charger 200 from the current sensor 201, and then determines whether or not the supplied current is equal to or greater than the first threshold included in the charging plan. When it has been determined that the acquired current supplied by the charger 200 is not equal to or greater than the first threshold (S101; No), the process advances to S103.

### (S102)

When it has been determined that the acquired current supplied by the charger 200 is equal to or greater than the first threshold (S101; Yes), the buffer capacitor control unit 432 sends a control signal to the buffer capacitor 160 to reduce the current supplied to each battery unit 110.

### (S103)

Next, the first switch control unit 431 determines whether or not all of the battery units 110 have been charged based on the state of charge of the battery units 110 supplied by the state-of-charge calculating unit 411. For example, when the state of charge of the battery units 110 is equal to or greater than a predetermined threshold (the fifth threshold), it is determined that the battery units 110 have been charged. There are no particular restrictions on the fifth threshold, which may be, for example, 80%, 85%, 90%, 95%, or 99%.

### (S104)

When it has been determined that all of the battery units 110 have been charged (S103; Yes), the first switch control unit 431 supplies control signals to all of the switches 120 in battery pack 100 to change all of the switches 120 to the second state. All of the switches 120 are switched to the second state, and the processing ends.

### (S105)

When it has not been determined that all of the battery units 110 have been charged (S103; No), the first switch control unit 431, based on the charging plan, selects "a" switches 120 (where "a" is an integer equal to or greater than 2) from the switches 120 corresponding to the battery units 110 whose state of charge was not determined to be equal to or greater than the predetermined threshold (fifth threshold) in S103 among all of the switches 120 in the battery pack 100. There are no particular restrictions on the selection criteria, which may include, for example, the state of charge of the switches 120 or the order of the switches 120 set in advance in the charging plan.

### (S106)

Next, the first switch control unit 431 switches the selected "a" switches 120 to the first state, and switches the switches 120 other than the "a" switches 120 to the second state. As a result, the charging current supplied to the battery pack 100 is supplied to the "a" switches 120 in the first state.

### (S107)

Next, the first switch control unit 431 continues charging until a predetermined first switching condition is satisfied. When it has been determined that the predetermined first switching condition has been satisfied (S107; Yes), the process returns to step S103. As mentioned above, the predetermined first switching condition may include the state of charge of the battery units 110 associated with the switches 120 in the first state reaching or exceeding a predetermined threshold (second threshold). The first switching condition may also include a predetermined amount of time passing since any of the switches 120 in the first state were switched from the second state to the first state.

### Discharge Control

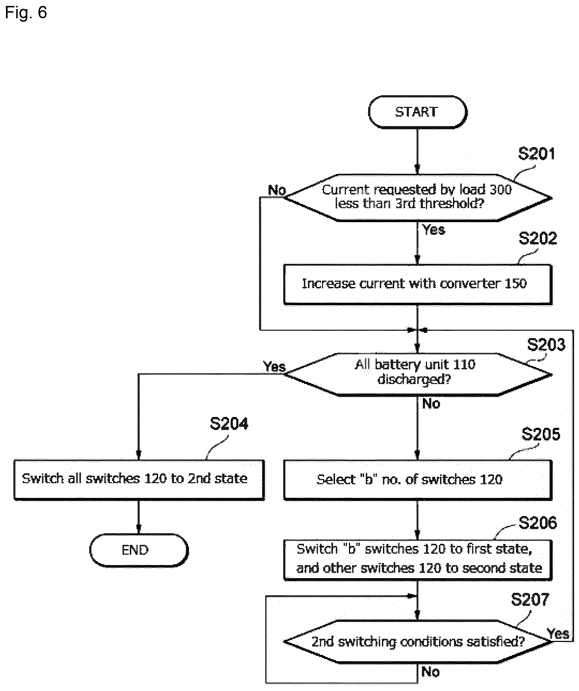

Fig. 6 is a diagram showing an example of the flow of discharge control operations performed by the BMS 400. The processing is performed primarily by discharge control unit 440 based on the discharge plan stored in the setting storage unit 412.

When the discharge control has been started, the state-of-charge calculating unit 411, for example, at predetermined intervals, calculates the state of charge of the battery units and sends the state of charge to the discharge control unit 440.

### (S201)

First, the converter control unit 442 obtains the current value for the current required by the load 300 from the current sensor 301, and then determines whether or not the requested current is equal to or less than the second threshold included in the discharge plan. When it has been determined that the acquired current requested by the load 300 is not equal to or less than the third threshold (S201; No), the process advances to S203.

### (S202)

When it has been determined that the acquired current requested by the load 300 is equal to or less than the third threshold (S201; Yes), the converter control unit 442 sends a control signal to the converter 150 to reduce the current discharged from each battery unit 110 and supplied to the load 300.

### (S203)

Next, the second switch control unit 441 determines whether or not all of the battery units 110 have been discharged based on the state of charge of the battery units 110 supplied by the state-of-charge calculating unit 411. For example, when the state of charge of the battery units 110 is equal to or less than a predetermined threshold (the sixth threshold), it is determined that the battery units 110 have been discharged. There are no particular restrictions on the sixth threshold, which may be, for example, 1%, 3%, 5%, 10%, 20%, 30%, 40%, or 50%.

### (S204)

When it has been determined that all of the battery units 110 have been discharged (S203; Yes), the second switch control unit 441 supplies control signals to all of the switches 120 in battery pack 100 to change all of the switches 120 to the second state. All of the switches 120 are switched to the second state, and the processing ends.

### (S205)

When it has not been determined that all of the battery units 110 have been discharged (S203; No), the second switch control unit 441, based on the discharge plan, selects "b" switches 120 (where "b" is an integer less than "a") from the switches 120 corresponding to the battery units 110 associated with the switches 120 whose state of charge was not determined to be equal to or less than the predetermined threshold (sixth threshold) in S203 among all of the switches 120 in the battery pack 100. There are no particular restrictions on the selection criteria, which may include, for example, the state of charge of the switches 120 or the order of the switches 120 set in advance in the discharge plan.

### (S206)

Next, the second switch control unit 441 switches the selected "b" switches 120 to the first state, and switches the switches 120 other than the "b" switches 120 to the second state. As a result, the charging current supplied to the load 300 from the battery pack 100 is supplied from the "b" switches 120 in the first state.

### (S207)

Next, the second switch control unit 441 continues discharging until a predetermined second switching condition is satisfied. When it has been determined that the predetermined second switching condition has been satisfied (S207; Yes), the process returns to step S203. As mentioned above, the predetermined second switching condition may include the state of charge of the battery units 110 associated with the switches 120 in the first state reaching or exceeding a predetermined threshold (fourth threshold). The second switching condition may also include a predetermined amount of time passing since any of the switches 120 in the first state were switched from the second state to the first state.

### Modified Examples

The embodiment described above is provided merely to explain the present invention and is not intended to limit the present invention to the embodiment. Various modifications are possible without departing from the scope and spirit of the present invention.

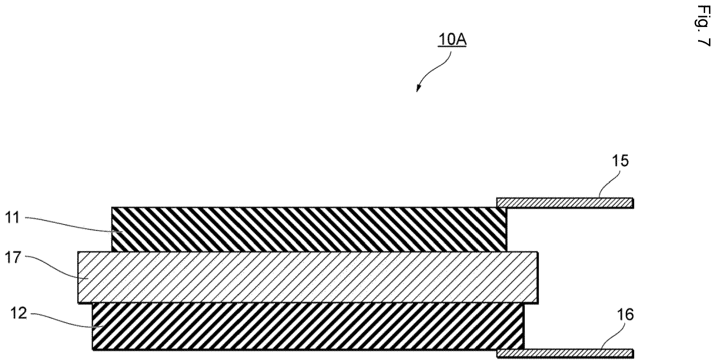

For example, the secondary battery cell may have a solid electrolyte layer instead of a separator. Fig. 7 is a cross-sectional view of a variation on the secondary battery cell 10A. The secondary battery cell 10A shown in Fig. 7 is a solid-state battery in which a solid electrolyte layer 17 is formed between the positive electrode 11 and the negative electrode 13. This secondary battery cell 10A differs from the secondary battery cell 10 in the embodiment described above (Fig. 2) in that the separator 13 has been changed to a solid electrolyte layer 17 and an outer casing is not required.

In general, in a battery containing an electrolytic solution, the physical pressure applied by the electrolytic solution to the surface of the negative electrode tends to vary locally due to fluctuations in the liquid. In contrast, because the secondary battery cell 10A includes a solid electrolyte layer 17, the pressure applied to the surface of the negative electrode 12 is more uniform, and the shape of the carrier metal deposited on the surface of the negative electrode 12 is more uniform. Because the carrier metal deposited on the surface of the negative electrode 12 is kept from growing in the form of dendrites, the cycle characteristics of the secondary battery (secondary battery cell 10A) are further improved.

A commonly used material can be selected for the solid electrolyte layer 17 based on the intended application of the secondary battery and the type of carrier metal used. Preferably, the solid electrolyte layer 17 has ionic conductivity and no electron conductivity. This can further reduce the internal resistance in the secondary battery cell 10A and further suppress short-circuiting inside the secondary battery cell 10A. As a result, the secondary battery (secondary battery cell 10A) has a higher energy density and even more excellent cycle characteristics.

There are no particular restrictions on the solid electrolyte layer 17, which may include, for example, resins and salts. Resins include, but are not limited to, resins having an ethylene oxide unit in the main chain and/or a side chain, acrylic resins, vinyl resins, ester resins, nylon resins, polysiloxanes, polyphosphazene, polyvinylidene fluoride, polymethyl methacrylate, polyamides, polyimides, aramids, polylactic acid, polyethylenes, polystyrenes, polyurethanes, polypropylenes, polybutylenes, polyacetals, polysulfones, and polytetrafluoroethylene. These resins can be used alone or in combinations of two or more.

There are no particular restrictions on the salt used in the solid electrolyte layer 17. Examples include salts of Li, Na, K, Ca, and Mg. Examples of lithium salts that can be used include, but are not limited to, Lil, LiCI, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(O₂C₂H₄)F₂, LiB(OCOCF₃)₄, LiNOs, and Li₂SO₄. These lithium salts can be used alone or in combinations of two or more.

Generally, the ratio of resin to lithium salt in the solid electrolyte is determined by the ratio of oxygen atoms in the resin to lithium atoms in the lithium salt ([Li]/[O]). In the solid electrolyte layer 17, the ([Li]/[O]) ratio is preferably 0.02 or more and 0.20 or less, more preferably 0.03 or more and 0.15 or less, and even more preferably 0.04 or more and 0.12 or less.

The solid electrolyte layer 17 may contain components other than the resins and salts mentioned above. For example, the layer may contain an electrolytic solution similar to the electrolytic solution in the secondary battery cell 10. In this case, the secondary battery cell 10A is preferably sealed inside an outer casing.

The solid electrolyte layer 17 preferably has a certain thickness from the standpoint of reliably separating the positive electrode from the negative electrode. However, from the standpoint of increasing the energy density of the secondary battery (secondary battery cell 10A), the thickness is preferably kept below a certain level. Specifically, the average thickness of the solid electrolyte layer 17 is preferably from 5 µm to 20 µm, more preferably from 7 µm to 18 µm or less, and even more preferably from 10 µm to 15 µm.

In the present specification, "solid electrolyte" includes gel electrolytes. Gel electrolytes include, but are not limited to, those containing polymers, organic solvents, and lithium salts. Polymers that can be used in a gel electrolyte include, but are not limited to, copolymers of polyethylene and/or polyethylene oxide, polyvinylidene fluoride, and copolymers of polyvinylidene fluoride, and hexafluoropropylene.

The secondary battery cell 10 may also have a current collector arranged so as to be in contact with the positive electrode or the negative electrode. Here, a positive terminal and a negative terminal are connected to the current collector. There are no particular restrictions on the current. Examples include current collectors that can be used with negative electrode materials. When the secondary battery cell 10 does not have a current collector, the negative electrode and the positive electrode themselves act as current collectors.

The secondary battery cell 10 may also be formed by laminating a plurality of negative electrodes, separators or solid electrolyte layers, and positive electrodes to improve battery capacity and output voltage. The number of laminated units may be, for example, three or more, and preferably from ten to 30.

In the present specification, "high energy density" means the capacity is high relative to the total volume or total mass of the battery. This is preferably 800 Wh/L or more or 350 Wh/kg or more, more preferably 900 Wh/L or more or 400 Wh/kg or more, and even more preferably 1000 Wh/L or more or 450 Wh/kg or more.

The embodiments described above are provided to make the present invention easier to understand, and are not intended to limit interpretation of the present invention. Each element included in the embodiments and their arrangement, materials, conditions, shape, size, etc. are not limited to those depicted herein and can be changed when appropriate. Also, elements in different embodiments can be partially replaced or combined when appropriate.

### Reference Signs List

1: Battery system
10: Secondary battery cell
11: Positive electrode
12: Negative electrode
13: Separator
14: Outer casing
15: Positive electrode terminal
16: Negative electrode terminal
17: Solid electrolyte
100: Battery pack
110: Battery unit
120: Switch
130: Current sensor
140: Voltage sensor
150: Converter
160: Buffer capacitor
200: Charger
201: Current sensor
300: Load
301: Current sensor
400: Battery management system (BMS)
401: Memory
402: CPU
410: State-of-charge calculating unit
420: Setting storage unit
430: Charge control unit
431: First switch control unit
432: Buffer capacitor control unit
440: Discharge control unit
441: Second switch control unit
442: Converter control unit

## Claims

1. A battery system comprising:
a plurality of battery units arranged so as to be connected to each other in parallel and including at least one battery cell that has a negative electrode that is free of a negative electrode active material;
a plurality of switches provided for each of the plurality of battery units that can switch between a first state in which the battery unit is connected to a charging pathway or a discharge pathway, and a second state in which the battery unit is not connected to the charging pathway or the discharge pathway;
a charge control unit that performs charging control on the plurality of battery units by controlling switching of the plurality of switches; and
a discharge control unit that performs discharge control of the plurality of battery units by controlling switching of the plurality of switches,
wherein the charge control unit includes a first switch control unit that simultaneously sets "a" (where "a" is an integer equal to or greater than 2) selected switches to the first state and sets the remaining switches except the "a" switches to the second state, and
the discharge control unit includes a second switch control unit that simultaneously sets "b" (where b < a) selected switches to the first state and sets the remaining switches except the "b" switches to the second state.

2. The battery system according to claim 1, further comprising a buffer capacitor connected in series with the plurality of battery units, and a buffer capacitor control unit that controls the buffer capacitor to reduce the current supplied to the plurality of battery units by absorbing at least some of the supplied current when the current supplied from the charger connected to the plurality of battery units is equal to or greater than a first threshold.

3. The battery system according to claim 2, wherein the buffer capacitor reduces the supplied current to the first threshold.

4. The battery system according to any one of claims 1 to 3, wherein the first switch control unit switches one switch selected from among the "a" switches in the first state from the first state to the second state and switches one switch selected from among the switches other than the "a" switches in the second state to the first state when a predetermined first switching condition is satisfied.

5. The battery system according to claim 4, wherein the predetermined first switching condition includes the state-of-charge of at least one of the battery units associated with the "a" switches in the first state becoming equal to or greater than a second threshold.

6. The battery system according to claim 4 or 5, wherein the predetermined first switching condition includes a predetermined time having passed since any of the "a" switches in the first state were switched from the second state to the first state.

7. The battery system according to any one of claims 1 to 6, further comprising a converter connected in series with the plurality of battery units, and a converter control unit that controls the converter to reduce the discharge current from the plurality of battery units and supply the current to the load by stepping down the voltage on the plurality of battery units side and applying the voltage to the load side when the current required by the load connected to the plurality of battery units is less than or equal to a third threshold.

8. The battery system according to claim 7, wherein the converter steps down the voltage on the plurality of battery units side so that the discharge current from the plurality of battery units reaches the third threshold value, and then applies the voltage to the load side.

9. The battery system according to any one of claims 1 to 8, wherein the second switch control unit switches one switch selected from among the "b" switches in the first state from the first state to the second state and switches one switch selected from among the switches other than the "b" switches in the second state to the first state when a predetermined second switching condition is satisfied.

10. The battery system according to claim 9, wherein the predetermined second switching condition includes the state-of-charge of at least one of the battery units associated with the "b" switches in the first state becoming less than or equal to a fourth threshold.

11. The battery system according to claim 9 or 10, wherein the predetermined second switching condition includes a predetermined time having passed since any of the "b" switches in the first state were switched from the second state to the first state.

12. The battery system according to any one of claims 1 to 11, wherein the number of the plurality of battery units is 3 or more.

13. The battery system according to any one of claims 1 to 12, wherein each of the plurality of battery units includes three battery cells connected in parallel to each other.

14. The battery system according to any one of claims 1 to 13, wherein the ratio of the discharge rate for each battery cell during discharge control to the charge rate for each battery cell during charging control is 2 or more.

15. A control device for a battery system comprising:
a plurality of battery units arranged so as to be connected to each other in parallel and including at least one battery cell that has a negative electrode that is free of a negative electrode active material; and
a plurality of switches provided for each of the plurality of battery units that can switch between a first state in which the battery unit is connected to a charging pathway or a discharge pathway, and a second state in which the battery unit is not connected to the charging pathway or the discharge pathway,
wherein the control device comprises:
a charge control unit that performs charging control on the plurality of battery units by controlling the switching of the plurality of switches; and
a discharge control unit that performs discharge control of the plurality of battery units by controlling the switching of the plurality of switches,
the charge control unit includes a first switch control unit that simultaneously sets "a" (where "a" is an integer equal to or greater than 2) selected switches to the first state and sets the remaining switches except the "a" switches to the second state, and
the discharge control unit includes a second switch control unit that simultaneously sets "b" (where "b" is an integer less than "a") selected switches to the first state and sets the remaining switches except the "b" switches to the second state.

16. A control method for a battery system comprising:
a plurality of battery units arranged so as to be connected to each other in parallel and including at least one battery cell that has a negative electrode that is free of a negative electrode active material; and
a plurality of switches provided for each of the plurality of battery units that can switch between a first state in which the battery unit is connected to a charging pathway or a discharge pathway, and a second state in which the battery unit is not connected to the charging pathway or the discharge pathway,
wherein the control method comprises the steps of:
executing charge controls on the plurality of battery units by controlling the switching of the plurality of switches; and
executing discharge controls on the plurality of battery units by controlling the switching of the plurality of switches, and
wherein the charge control step includes a first switch control step that simultaneously sets "a" (where "a" is an integer equal to or greater than 2) selected switches to the first state and sets the remaining switches except the "a" switches to the second state, and
the discharge control step includes a second switch control step that simultaneously sets "b" (where "b" is an integer less than "a") selected switches to the first state and sets the remaining switches except the "b" switches to the second state.
